# EUROPEAN PATENT APPLICATION

(11) **EP 3 104 268 A1**
(43) Date of publication of application: **14.12.2016**
(21) Application number: 16164154.3
(22) Date of filing: 07.04.2016
(51) Int. Cl.: G06F 3/12, H04N 1/00

(54) **IMAGE FORMING APPARATUS, JOB CONTROL METHOD OF IMAGE FORMING APPARATUS, AND STORAGE MEDIUM**

(30) Priority: 11.06.2015 US 201514737213
(71) Applicant: Kabushiki Kaisha Toshiba, Tokyo 105-8001 (JP); Toshiba TEC Kabushiki Kaisha, Tokyo 141-0032 (JP)
(72) Inventor: SAITO, Akira, Shinagawa-ku, Tokyo 141-8562 (JP)
(74) Representative: Takeuchi, Maya

(57) **Abstract**

An image forming apparatus according to an embodiment includes a storage unit, a display unit, an input unit and a control unit. The storage unit stores execution history information of each of a plurality of executed jobs including setting information for each of the plurality of executed jobs. The display unit displays a list of the plurality of executed jobs. The input unit receives a selection of one of the plurality of executed jobs from the list displayed on the display unit. The control unit executes a job using settings based on the setting information corresponding to the selected executed job.

## Description

### FIELD

Embodiments described herein relate generally to an image forming apparatus, a control method of the image forming apparatus, and a storage medium.

### BACKGROUND

A digital multi-functional peripheral has a function of managing various processes relating to an image, including printing, copying, scanning, faxing, a data communication, or the like, as a job. However, in a digital multi-functional peripheral in the related art, when a job which has been executed in the past is re-executed using the same setting, it is necessary to execute a process of inputting the same image again by performing the same setting again. In addition, there is a multi-functional peripheral which has a template function of storing set contents of a job as a template. However, a user must perform storing, calling, and re-inputting when the template function thereby taking a lot of time to perform the above-cited processes.

### DESCRIPTION OF THE DRAWINGS

FIG. 1 is a block diagram which schematically illustrates an example configuration of a digital multi-functional peripheral according to an embodiment.
FIG. 2 illustrates an example conceptual configuration of software which executes a control of the digital multi-functional peripheral.
FIG. 3 illustrates an example flow of operations for execution of a job in the digital multi-functional peripheral.
FIG. 4 illustrates another example sequence of operations for execution of a job in the digital multi-functional peripheral.
FIG. 5 illustrates an example flow of operations when a job is executed based on execution history information of the job in the digital multi-functional peripheral.
FIG. 6 illustrates a display example of execution history information of a job in the digital multi-functional peripheral.
FIG. 7 illustrates a display example of a setting screen of a re-execution job based on execution history information which is selected in the digital multi-functional peripheral.
FIGS. 8 and 9 illustrate an example sequence of operations for a job execution based on execution history information in the digital multi-functional peripheral.

### DETAILED DESCRIPTION

To this end, there is provided an image forming apparatus according to an embodiment includes a storage unit, a display unit, an input unit and a control unit. The storage unit stores execution history information of each of a plurality of executed jobs including setting information for each of the plurality of executed jobs. The display unit displays a list of the plurality of executed jobs. The input unit receives a selection of one of the plurality of executed jobs from the list displayed on the display unit. The control unit executes a job using settings based on the setting information corresponding to the selected executed job.

Preferably, the input unit is further configured to receive a selection of a change to the settings based on the setting information corresponding to the selected executed job.

Preferably, the control unit is further configured to execute the job using settings based on the selected change.

The apparatus may, further comprise: an image processing unit configured to generate a thumbnail image based on at least a part of an image which is used in an executed job, wherein the storage unit is further configured to store the thumbnail image generated by the image processing unit in correlation with the execution history information of the corresponding executed job.

Preferably, the display unit is further configured to display the thumbnail image in correlation the corresponding executed job.

Preferably, the storage unit is further configured to store an image used in an executed job in correlation with the execution history information of the corresponding executed job.

Preferably, the control unit is further configured to re-execute the executed job using the stored image and settings based on the setting information corresponding to the selected executed job.

Preferably, the control unit is further configured to delete the stored image according to a predetermined security condition.

The present invention further relates to a job control method which is used in an image forming apparatus comprising the steps of: storing, in a storage unit, execution history information of each of a plurality of executed jobs including setting information for each of the plurality of executed jobs; displaying, on a display unit, a list of the plurality of executed jobs; receiving a selection of one of the plurality of executed jobs from the list displayed on the display unit; and executing a job using settings based on the setting information corresponding to the selected executed job.

The method may further comprise the step of: receiving a selection of a change to the settings based on the setting information corresponding to the selected execution history information. Preferably, the job is executed using settings further based on the selected change.

The method may further comprise the step of: generating a thumbnail image based on at least a part of an image which is used in an executed job; and storing the generated thumbnail image in correlation with the execution history information of the corresponding executed job.

The method may further comprise the step of displaying the thumbnail image in correlation with the corresponding executed job.

The method may further comprise the step of storing an image used in an executed job in correlation with the execution history information of the corresponding executed job.

Preferably, executing the job comprises re-executing the selected executed job using the stored image and settings based on the setting information corresponding to the selected executed job.

The method may further comprise the step of deleting the stored image according to a predetermined security condition.

The present invention further relates to a non-transitory recording medium which stores a program which is used in an image forming apparatus, the program including instructions for causing a processor in the image forming apparatus to execute the steps of: storing, in a storage unit, execution history information of each of a plurality of executed jobs including setting information for each of the plurality of executed jobs; displaying, on a display unit, a list of the plurality of executed jobs; receiving a selection of one of the plurality of executed jobs from the list displayed on the display unit; and executing a job using settings based on the setting information corresponding to the selected executed job.

Preferably, the instructions further causes the processor to execute the step of: receiving a selection of a change to the settings based on the setting information corresponding to the selected execution history information, wherein the job is executed using settings further based on the selected change.

Preferably, the instructions further causing the processor to execute the steps of:
generating a thumbnail image based on at least a part of an image which is used in an executed job; and storing the generated thumbnail image in correlation with the corresponding executed job.

Preferably, the instructions further causing the processor to execute the step of:
displaying the thumbnail image in correlation with the execution history information of the corresponding executed job.

Preferably, the instructions further causing the processor to execute the step of:
storing an image used in an executed job in correlation with the corresponding executed job, wherein executing the job comprises re-executing the selected executed job using the stored image and settings based on the setting information corresponding to the selected executed job.

Preferably, the instructions further causing the processor to execute the step of deleting the stored image according to a predetermined security condition.

Image forming apparatuses having a function of managing printing, copying, scanning, faxing, a data communication, or the like, are often installed in an office. In general, one image forming apparatus is outfitted to a group of several people for a budgetary reason. Thus, if a person of the group takes a time to configure the apparatus, the work efficiency of the group is immediately decreased. However, the present invention enables to simplify the recognition of a job thereby increasing the work efficiency of users.

Hereinafter, embodiments will be described, as non-limiting examples, with reference to drawings.

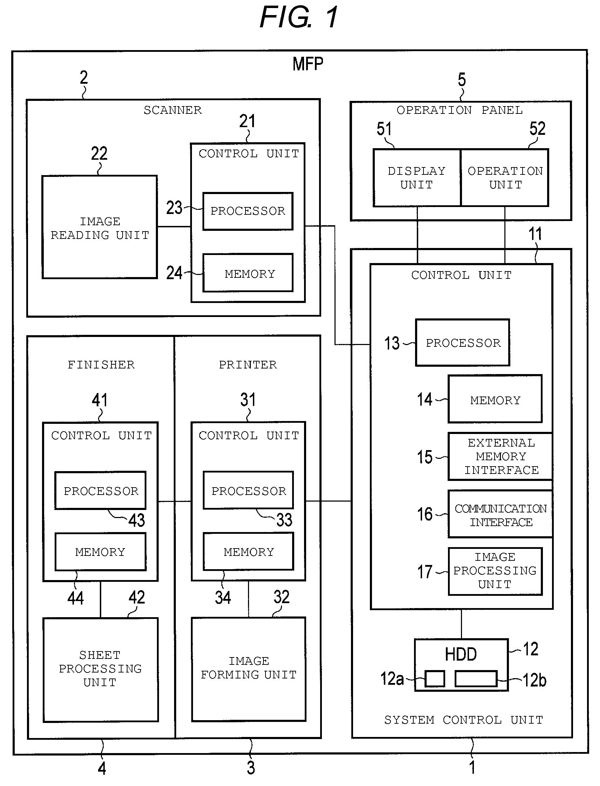

FIG. 1 is a block diagram which schematically illustrates an example configuration of a digital multi-functional peripheral according to an embodiment. The digital multi-functional peripheral (MFP) according to the embodiment includes an image forming apparatus. In an example illustrated in FIG. 1, the digital multi-functional peripheral includes a system control unit 1, a scanner 2, a printer 3, a finisher 4, and an operation panel 5.

The system control unit 1 collectively controls each unit of the digital multi-functional peripheral. The system control unit 1 includes a control unit 11, an HDD 12, and the like. The control unit 11 includes a control board (system control board). The control unit 11 functions as a control unit which controls the entire digital multi-functional peripheral (system). The control unit 11 includes a processor 13, a memory 14, an external memory interface 15, a communication interface 16, an image processing unit 17, and the like. The control unit 11 may include a control board on which a CPU 13, the memory 14, the external memory interface 15, the communication interface 16, the image processing unit 17, and the like, are mounted.

The processor 13 performs the entire control of the system, data processing, and the like. The processor 13 is a CPU, for example. The processor 13 performs various processes by executing a program which is stored in the memory 14. The memory 14 includes a RAM, a ROM, an EEPROM, or the like. The external memory interface 15 is an interface to which an external memory is connected. The communication interface 16 is an interface which communicates with an external device through a network, or the like.

The image processing unit 17 is a processing unit which performs an image processing, data conversion processing (file conversion), or the like. The image processing unit 17 performs image processing corresponding to one or more set parameters. The image processing unit 17 performs functions of image processing with respect to a scanned image, image processing which generates an image for printing, image processing for forming a thumbnail image, and the like.

The HDD 12 is a large capacity storage. The HDD 12 includes a history database (DB) 12a, and an image storage unit 12b. The history DB 12a stores execution history information of a job. The execution history information which is stored in the history DB 12a is information which denotes an execution result of a job, set contents of the job, or the like. The image storage unit 12b functions as a storage medium which stores an image which is used in the job. In addition, the image storage unit 12b also stores a thumbnail image which is formed from the image which is used in the job. However, the thumbnail image may be stored in the history DB 12a as part of the execution history information of a job.

In addition, the history DB 12a and the image storage unit 12b may be accessed by the control unit 11 of the system control unit 1. For example, the history DB 12a and/or the image storage unit 12b may be provided in an external device other than the digital multi-functional peripheral.

The scanner 2 is a processing unit which converts an image of the original document into data by reading the image. The scanner 2 includes a control unit (scanner control unit) 21, and an image reading unit 22. The control unit 21 controls operations of the image reading unit 22. The control unit 21 includes a processor 23, a memory 24, and the like. The control unit 21 may include a control board on which the processor 23, the memory 24, and the like, are mounted.

The processor 23 is connected to the control unit 11 of the system control unit 1 through an interface. The processor 23 performs various processes in the scanner 2 by executing a program which is stored in the memory 24. For example, the processor 23 reads an image of the original document using the image reading unit 22 according to an instruction from the system control unit 1, and outputs data of the read image to the system control unit 1.

The image reading unit 22 converts the image on a reading face of the original document into image data. The image reading unit 22 may include a CCD line sensor, or the like. The image reading unit 22 may be a unit which scans the original document which is placed on glass of the original document table, and may be a unit which reads an image of the original document which is transported by an auto document feeder (ADF).

The printer 3 is a processing unit which forms an image on a sheet which is a recording medium. The printer 3 includes a control unit (printer control unit) 31 and an image forming unit 32. The control unit 31 controls the image forming unit 32. The control unit 31 includes a processor 33, and a memory 34. The control unit 31 is configured of a control board on which the processor 33, the memory 34, and the like, are mounted. The processor 33 of the control unit 31 is connected to the control unit 11 of the system control unit 1 through an interface. The processor 33 performs various processes in the printer 3 by executing a program which is stored in the memory 34. For example, the processor 33 forms an image in the recording medium by controlling the image forming unit 32 according to an instruction from the system control unit 1.

The image forming unit 32 forms an image on the recording medium. The image forming unit 32 may be a monochrome printer, or a color printer. In addition, the image forming unit 32 is not limited to a specific image forming method. For example, the image forming unit 32 may be an electro-photographic type, an ink jet type, or a thermal transfer-type image forming apparatus.

The finisher 4 is a processing unit which processes a sheet that was processed by the printer 3. The finisher 4 includes a control unit (finisher control unit) 41 and a sheet processing unit 42. The control unit 41 includes a processor 43, and a memory 44. The control unit 41 may include a control board on which the processor 43, the memory 44, and the like, are mounted. The processor 43 of the control unit 41 is connected to the control unit 31 of the printer 3 through an interface. The processor 43 performs various processes in the finisher 4 by executing a program which is stored in the memory 44. The sheet processing unit 42 performs a finishing process such as stapling, electronic sorting, and the like, with respect to a sheet which is printed using the printer 3.

The operation panel 5 is a user interface. The operation panel 5 includes a display unit 51, and an operation unit 52. The display unit 51 and the operation unit 52 are connected to the control unit 11 of the system control unit 1. The display unit 51 may include a liquid crystal display device (LCD) with a backlight, or the like. The operation unit 52 may include a touch panel, and a hard key. For example, the display unit 51 and the operation unit 52 may include a liquid crystal display device with an integrated touch panel.

Subsequently, an example configuration of a control system in the digital multi-functional peripheral will be described.

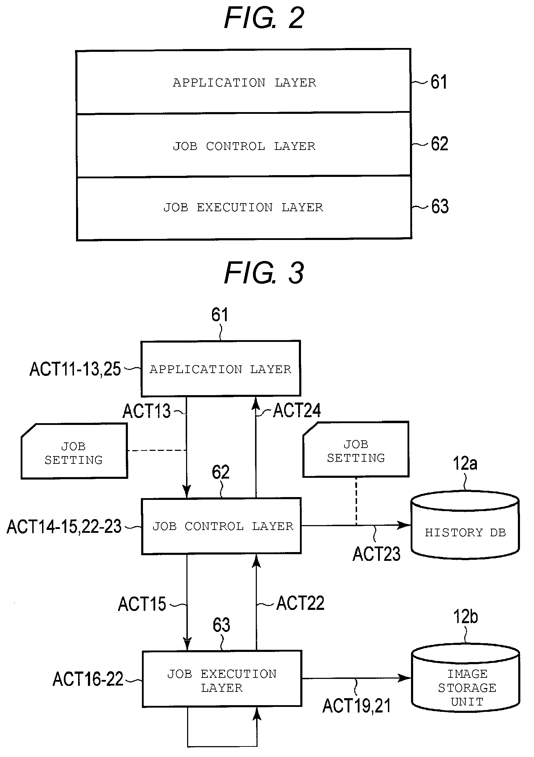

FIG. 2 illustrates an example conceptual configuration of software which executes a control of the digital multi-functional peripheral.

FIG. 2 illustrates a model on which an application layer 61, a job control layer 62, and a job execution layer 63 are laminated in order. In the model illustrated in FIG. 2, the job control layer 62 manages a job (process). For example, the job control layer 62 causes the job execution layer 63 to executes a job corresponding to a request from the application layer 61. Each layer illustrated in FIG. 2 is a program group which executes various functions. For example, the processor 13 of the system control unit 1 executes various functions by executing each program in each layer.

The application layer 61 may include an application program group for performing a panel control, a WEB control, a template creation, or the like. For example, the program for the panel control receives setting for a job, an instruction for executing the job, and the like, which are input to the operation unit 52 of the operation panel 5 by a user. In addition, the program for the WEB control receives setting for a job, an instruction for executing the job, and the like, which are input on a WEB browser in an external device with which a communication is performed through the network interface 16.

In addition, the application layer 61 includes a program for executing a function of obtaining execution history information of a job, and a function of displaying the obtained execution history information on the display unit 51. In addition, the application layer 61 also includes a program for executing a function of obtaining a thumbnail image corresponding to execution history information of a job, and a function of displaying the obtained thumbnail image along with the execution history information on the display unit 51. In addition, the application layer 61 also includes a program for executing a function for managing an image which is stored in the image storage unit 12b.

The job control layer 62 includes a program for managing a job. For example, the program of the job control layer 62 controls execution order of a job which is requested from the application layer 61. The program of the job control layer 62 instructs the job execution layer 63 for jobs to be executed in order. In addition, the program of the job control layer 62 also manages an execution result, history information, and the like, provided for the job from the job execution layer 63.

The job execution layer 63 includes a program for practically executing a job (process) by controlling each unit. The job execution layer 63 includes a program for executing jobs such as a printing process, a scanning process, a copying process, a faxing process, a data communication process, a file storage process, and the like. For example, the job execution layer 63 includes a program which causes a printing process to be executed by controlling the printer 3 according to a parameter which is set in the job control layer 62. In addition, the job execution layer 63 includes a program which causes a copying process to be executed by controlling the scanner 2 and the printer 3 according to a parameter which is set in the job control layer 62.

Subsequently, execution operations for performing a job in the digital multi-functional peripheral will be described.

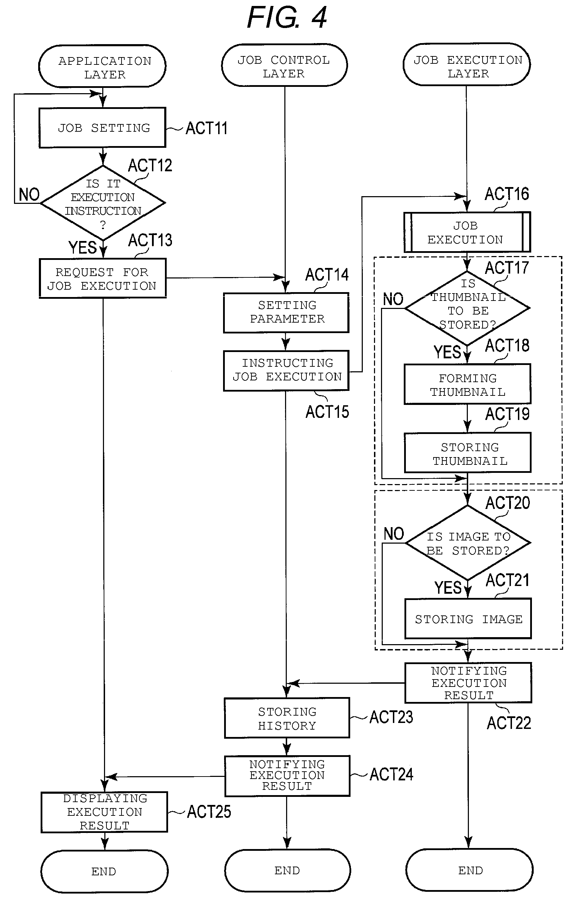

FIG. 3 illustrates an example flow of operations for execution of a job using the model in FIG. 2. FIG. 4 illustrates another example flow of operations for execution of a job in the digital multi-functional peripheral.

The processor 13 receives an input of job setting using the program of the application layer 61 (ACT 11). For example, the processor 13 receives the job setting which is input to the operation unit 52 by executing the program for the panel control. In addition, the processor 13 may receive the job setting which is input to an external device by executing the program for the WEB control.

The job setting includes setting of a function which is executed using hardware, and setting of a function which is executed using software. The function which is executed using hardware may be a scanning function, a printing function, a finisher function, a fax communication function, a function of network communication, or the like. The function which is executed using software may be an electronic sorting function, a resolution setting function, a file formatting function, or the like.

In addition, the job setting also includes setting of validity or invalidity of storing an image correlated with execution history information of a job, setting of validity or invalidity of storing a thumbnail image (thumbnail), and the like. For example, a user who does not want to store an image which is used in a job can set storage of the image to be invalid. In addition, a user who does not want to store a thumbnail image which is used in a job can set storage of the thumbnail image to be invalid. In addition, it may be set such that a default setting in which storing of the image and thumbnail image is valid is performed, and storing of an image and thumbnail image is set to be invalid using a designation of a user.

When an input of job setting is received, the processor 13 receives a job execution instruction in the operation panel 5, or on a WEB browser (ACT 12). When receiving the job execution instruction (Yes in ACT 12), the processor 13 delivers a job execution request to the program of the job control layer 62 along with information denoting contents of the designated job setting (job setting information) (ACT 13).

The processor 13 receives the job execution request and the job setting information using the program of the job control layer 62. When receiving the job execution request, the processor 13 sets a parameter for executing the job based on the job setting information (ACT 14).

For example, when it is a copying job, the processor 13 sets a parameter which denotes job contents such as setting of scanning, setting of printing, setting of finishing, or the like. In addition, as the setting of scanning, a parameter denoting setting of resolution, and setting of ADF is included. As the setting of printing, a parameter denoting setting of a sheet, setting of toner (color or monochrome), setting of double side, setting of image processing, and the like, are included. As the setting of finishing, a parameter denoting setting of a discharge bin, setting of stapling, setting of hole punching, setting of a function of center folding, and the like, are included.

Further, in the parameter setting for executing the job, the processor 13 also sets a parameter related to storing of history information, in addition to the parameter denoting the job contents. For example, the processor 13 sets a parameter denoting whether or not an image used in a job is stored. In addition, the processor 13 also sets a parameter denoting whether or not a thumbnail image of an image which is used in the job is stored. When the parameter for executing a job is set, the processor 13 delivers a job execution instruction to the job execution layer 63 along with the set parameter (ACT 15).

When the job execution is instructed, the processor 13 executes the job using the program of the job execution layer 63 and using the parameter which is set in the job control layer 62 (ACT 16). For example, when it is a copying job, the processor 13 reads an image of the original document by controlling the scanner 2 according to the parameter. When reading the image of the original document, the processor 13 prints the read image on a recording medium by controlling the printer 3 according to the parameter. When the image is printed on the recording medium, the processor 13 processes the recording medium by controlling the finisher 4 according to the parameter.

In addition, the processor 13 determines whether to store a thumbnail image (thumbnail) based on the job setting (set parameter) along with executing of the job (ACT 17). When it is determined that the thumbnail image is stored, (Yes in ACT 17), the processor 13 forms the thumbnail image of the image which is used in the job (ACT 18).

For example, when it is a copying job, the processor 13 forms a thumbnail image from a scanned image or an image for printing. In addition, when it is a printing job, the processor 13 forms a thumbnail image from an image for printing. In addition, when it is a scanning job, the processor 13 forms a thumbnail image from a scanned image. When it is a faxing job, the processor 13 forms a thumbnail image from an image which is obtained through a fax communication.

For example, a thumbnail image is formed by the image processing unit 17 according to a command of the processor 13. In addition, the thumbnail image may be formed when the processor 13 executes the program of the application layer 61. It may be a thumbnail image from an external device. In addition, the thumbnail image may be an image which is formed by reducing an image on a first page of a multi-page image which is used in the job. The thumbnail image may be an image which is formed by cutting out an image region of a characterizing portion.

When the thumbnail image is formed, the processor 13 stores the formed thumbnail image in the image storage unit 12b which is a recording medium (ACT 19). The processor 13 stores the thumbnail image in the image storage unit 12b in correlation with information denoting the job.

In addition, the processor 13 determines whether to store the image which is used in the job based on the job setting (set parameter) (ACT 20). After determining to store the image (Yes in ACT 20), the processor 13 stores the image which is used in the job in the image storage unit 12b in correlation with information denoting the job (ACT 21).

For example, when it is a copying job, the processor 13 stores the scanned image and/or the image for printing. In addition, when it is a printing job, the processor 13 stores the image for printing. In addition, when it is a scanning job, the processor 13 stores the scanned image. When it is a faxing job, the processor 13 stores an image which is obtained through a fax communication.

In addition, when the execution of the job is finished, the processor 13 provides notification completion of the job, and delivers information denoting an execution result of the job to the program of the job control layer 62 (ACT 22).

When completion of the job is notified, the processor 13 generates execution history information of the job based on the information denoting the execution result of the job. The execution history information of the job includes information denoting a presence or absence of the thumbnail image, a storage destination of the thumbnail image, the fact of whether the image used in the job is stored, a storage destination of the image, and the like. When the execution history information of the job is generated, the processor 13 stores the generated execution history information of the job in the history DB 12a (ACT 23).

When the execution history information of the job is stored, the processor 13 delivers information denoting an execution result of the job in the program of the application layer 61 (ACT 24). When the execution result of the job is received, the processor 13 displays the information denoting the execution result of the job on the display unit 51 of the operation panel 5.

Due to the above described processes, the digital multi-functional peripheral stores the execution history information of the job in the history DB 12a, and may store the image used in the job and the thumbnail image in the image storage unit 12b.

Subsequently, operations when executing a job using setting based on history information of the job will be described.

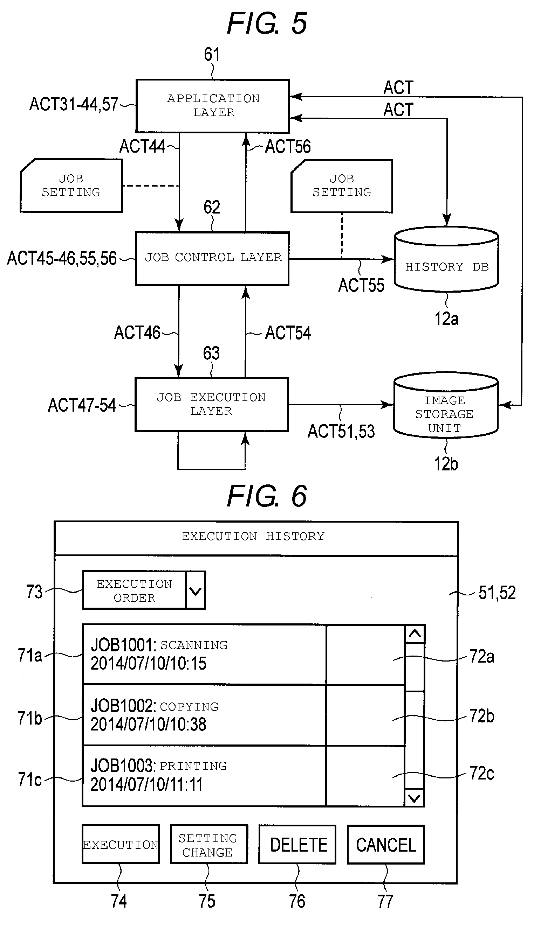

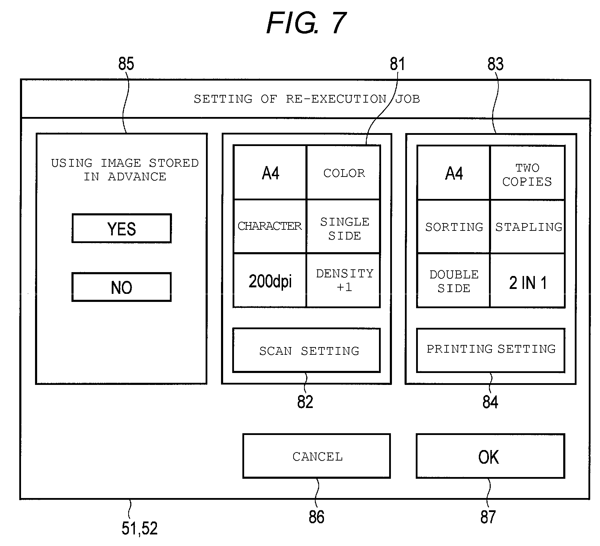

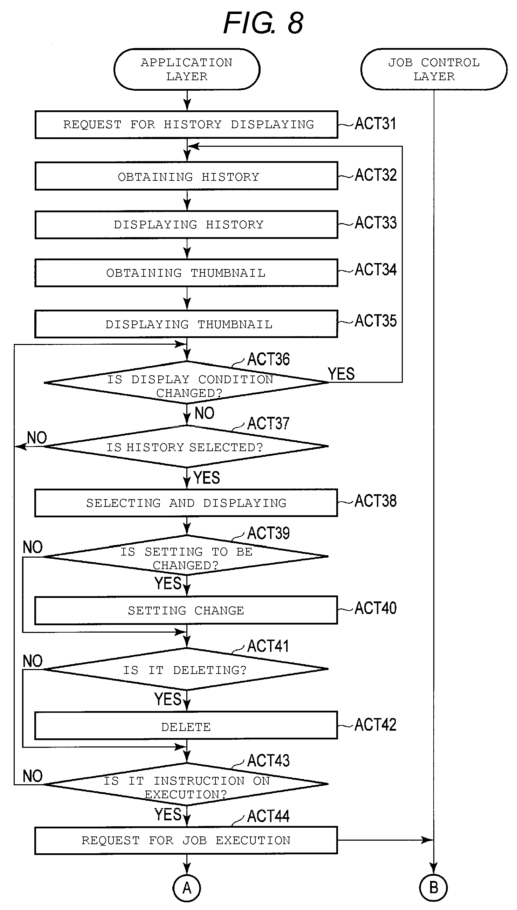

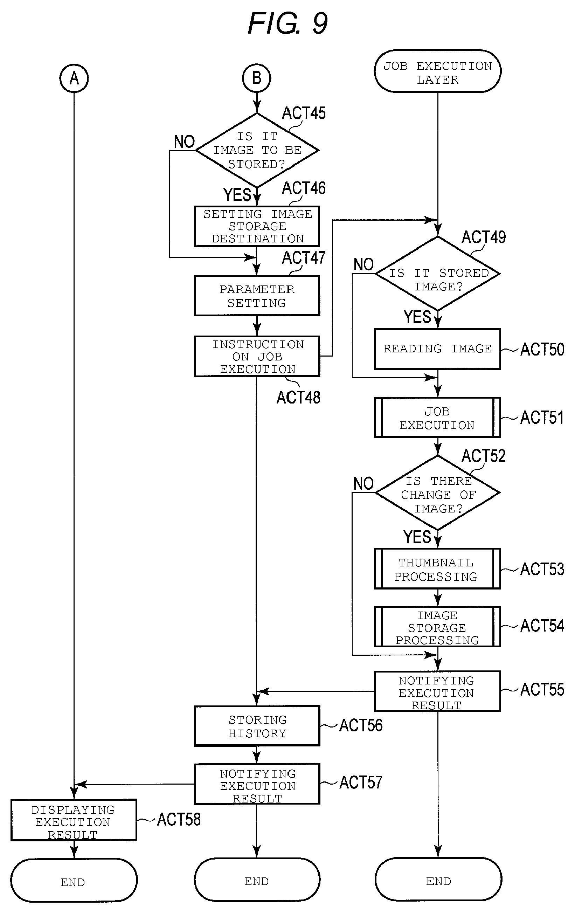

FIG. 5 illustrates an example flow of operations when a job is executed due to setting based on execution history information of the job using the model illustrated in FIG. 2. FIG. 6 illustrates a display example of execution history information of a job. FIG. 7 illustrates a detailed setting screen of a job which is selected in an execution history of the job. FIGS. 8 and 9 are flowcharts which illustrate an example sequence of operations for job execution using setting based on execution history information of a job in the digital multi-functional peripheral.

The processor 13 receives a display request of an execution history of a job using the program of the application layer 61 (ACT 31). For example, the processor 13 receives a display request of execution history information for the job which is input to the operation unit 52 by executing the program for the panel control. In addition, the processor 13 receives a display request of execution history information for a job which is input on a WEB browser by executing a program for the WEB control.

When the display request of the execution history information of the job is received, the processor 13 obtains execution history information of the job from the history DB 12a (ACT 32). For example, the processor 13 obtains execution history information for a job which matches a display condition of default setting (for example, by predetermined number in the newest order). In addition, when a condition of the execution history which is displayed on the operation panel 5 or the WEB browser is designated, the processor 13 obtains execution history information of a job matching the designated condition. When the execution history information of the job is obtained, the processor 13 displays the obtained execution history information on the display unit 51 or the WEB (ACT 33).

In addition, when the execution history information of the job is obtained, the processor 13 obtains a thumbnail image corresponding to the corresponding execution history information that is obtained from the image storage unit 12b (ACT 34). When the thumbnail image is obtained, the processor 13 displays the obtained thumbnail image on the display unit 51 in correlation with the corresponding execution history information (ACT 35). In addition, when a display of an execution history is requested from WEB, the processor 13 generates display information which is correlated with the corresponding execution history information of the thumbnail image, and makes access on the WEB browser possible.

FIG. 6 illustrates a display example in which the execution history information of the job is displayed on the display unit 51 of the operation panel 5.

In the example illustrated in FIG. 6, the display unit 51 displays execution history information 71 (71 a, 71 b, and 71 c) of the job using a list. In addition, the display unit 51 displays a thumbnail image 72 (72a, 72b, and 72c) in correlation with each execution history information 71 (71 a, 71 b, and 71 c) of the job. In addition, when there is no thumbnail image corresponding to the execution history information, the display unit 51 may not display the thumbnail image.

The execution history information 71 (71a, 71b, and 71c) of the job may be selected by a user. For example, the operation panel 5 may select a display portion of the execution history information of the job using a touch panel as the operation unit 52. In addition, the display unit 51 displays information denoting the execution history information which is selected by the user. For example, the display unit 51 displays the execution history information in a selected state by reverse-displaying the execution history information selected by the user.

In addition, in the display example illustrated in FIG. 6, the display unit 51 displays a column for displaying received matters 73 which may be selected for inputting display conditions. For example, the column for displaying received matters 73 has a pull-down key for displaying conditions which may be selected as display conditions using a list. When the pull-down key is input, the display unit 51 displays conditions which may be selected as display conditions using a list. The conditions displayed using a list may include: execution order (order from newest), order from oldest (execution order from oldest), order of types of a job, order of a job name, or the like.

In addition, in the display example illustrated in FIG. 6, the display unit 51 displays an execution button 74, a setting change button 75, a delete button 76, and a cancel button 77.

The execution button 74 is effective in a state in which execution history information of a job which may be re-executed is selected. For example, when the execution button 74 is designated in a state in which one piece of execution history information is selected, the processor 13 re-executes the job according to set contents based on the execution history information in the course of being selected. In addition, when the execution button 74 is designated in a state in which the set contents based on the execution history information are changed, the processor 13 executes a job based on the changed set contents.

The setting change button 75 is effective in a state in which one piece of execution history information is selected. When the setting change button 75 is designated (i.e., a set change is received), as illustrated in FIG. 7, the processor 13 displays a screen on which set contents of a job based on execution history information in the course of being selected is displayed in detail (setting screen of re-execution job). A user may change set contents on the setting screen of the re-execution job, after confirming the contents of the job which is selected in the execution history information.

The delete button 76 is effective when execution history information of a job which may be deleted is displayed. When the delete button 76 is designated, the processor 13 deletes the selected execution history information, a thumbnail image corresponding to the execution history information, and a stored image.

When the cancel button 77 is designated, the processor 13 finishes displaying of the display screen on which the execution history is displayed.

On the display screen of the execution history information as illustrated in FIG. 6, the processor 13 receives instructions from a user such as changing display conditions, selecting execution history information, or changing or deleting of setting, and the like.

For example, when changing display conditions of the execution history information is instructed (Yes in ACT 36), the processor 13 performs a process of redisplaying the execution history information and thumbnail image corresponding to the display conditions (ACTS 32 to 35).

In addition, when an instruction to select any of execution history information is input (Yes in ACT 37), the processor 13 displays that the designated execution history information is in a selected state (ACT 38). For example, the processor 13 performs a reverse display of a display portion of the execution history information which is instructed by a user. In this case, the display unit 51 displays the execution history information in the selected state by performing a reversing display.

When any of execution history information is in a selected state, the processor 13 receives a change in set contents based on the execution history information in the course of being selected (ACT 39). When the change in the set contents is instructed (Yes in ACT 39), the processor 13 displays in detail the set contents based on the selected execution history information, and displays a screen which receives a change (setting screen of re-execution job).

FIG. 7 is a setting screen of a re-execution job which receives confirming and changing of set contents. In the display example illustrated in FIG. 7, the display unit 51 displays a scanning setting display unit 81, a scanning setting change button 82, a printing setting display unit 83, a printing setting change button 84, a use selection unit for stored image 85, a cancel button 86, and an OK button 87.

The display unit 51 displays the scanning setting display unit 81 when a job selected in the execution history is scanning. The scanning setting display unit 81 displays set contents of scanning which is stored in the history DB 12a. Scanning items include: size, color, reading mode, designation of a single side or double side, resolution, and density of the original document, for example. When there is an item to be changed among these items, a user designates the scanning setting change button 82. The processor 13 receives an instruction of the change, and displays the changed value on the scanning setting display unit 81. In addition, setting of scanning is not changed when using a stored image which will be described later. Setting of scanning may be changed when the original document is newly scanned.

The display unit 51 displays the printing setting display unit 83 when the job selected in the execution history is copying or printing. The printing setting display unit 83 displays set contents which are stored in the history DB 12a. Printing setting items include: size of a printing sheet, number of sheets, presence or absence of sorting, presence or absence of stapling, designation of a single side or a double side, and designation of collective printing, for example. When there is an item to be changed among these items, a user designates the printing setting change button 84. The processor 13 displays a changed value on the printing setting display unit 81 by receiving an instruction of the change.

The use selection unit for stored image 85 selects whether to use in the job an image which is stored in the image storage unit 12b. A user designates a Yes button when using a stored image, and designates a No button when not using the stored image. In addition, when there is no stored image, the processor 13 is set so as not to select any button.

When the cancel button 86 is designated, in a state in which the set contents are displayed on the scanning setting display unit 81 or the printing setting display unit 83 of FIG. 7, or in the course of changing the scanning setting or the printing setting, the processor 13 returns to the screen in FIG. 6 without changing the setting. In addition, when the OK button 87 is designated after the changing of the scanning setting or printing setting, the processor 13 maintains the changed contents as a new parameter, and returns to the display screen of execution history information illustrated in FIG. 6 (ACT 40).

Alternatively, when the OK button 87 is designated after the changing of the scanning setting or printing setting, the processor 13 may receive an instruction on a job execution. That is, when the user pushes the OK button 87 on the display of Fig.7 after the changing of the scanning setting or printing setting, the job can be executed without returning to the display of Fig.6.

In addition, when any of execution history information is in a selected state on the display screen of the execution history information, the processor 13 receives an instruction to delete the selected execution history information (ACT 41). When the deletion of the selected execution history information is instructed (Yes in ACT 41), the processor 13 deletes the selected execution history information (ACT 42) from the history DB 12a, and deletes a thumbnail image and a stored screen corresponding to the execution history information from the image storage unit 12b.

In addition, when any of execution history information is in a selected state, the processor 13 receives an instruction on a job execution based on the selected execution history information (ACT 43). When the execution of the job is instructed (Yes in ACT 43), the processor 13 sends a request of the execution of the job to the job control layer 62 based on the selected execution history information (ACT 44).

For example, when the execution of the job is instructed in a state in which one piece of execution history information is selected, the processor 13 requests a re-execution of the job based on the selected execution history information. When an image of the job corresponding to the execution history information is stored, the processor 13 transmits job setting information of the execution history information, and information denoting a storage destination of the image, and requests the execution of the job.

In addition, when the execution of the job is instructed in a state in which set contents are changed based on the selected execution history information, the processor 13 requests the execution of the job based on the changed set contents. When an image corresponding to the execution history information is stored, the processor 13 transmits the changed set information, and information denoting a storage destination of the image, and requests the execution of the job.

The processor 13 receives a job execution request and job setting information from the program of the job control layer 62. When the job execution request is received, the processor 13 determines whether the image used in the job has been already stored when the job is a job to be re-executed (ACT 45).

When the image used in the job has been already stored (Yes in ACT 45), the processor 13 sets information denoting a storage destination of the image (ACT 46). When setting the information denoting the storage destination of the image, the processor 13 sets a parameter denoting the storage destination of the image and the set contents of the job (ACT 47). When these parameters are set, the processor 13 delivers the set parameter and an execution instruction of the job to the program of the job execution layer 63 (ACT 48).

The processor 13 receives the execution instruction of the job and the parameter for executing the job from the program of the job execution layer 63. When the execution request of the job is received, the processor 13 determines whether the image used in the job has been already stored (ACT 49).

When the image used in the job has been already stored (Yes in ACT 49), the processor 13 specifies a storage destination of the image, and reads the image from the image storage unit 12b (ACT 50). When the image is read from the image storage unit 12b, the processor 13 executes a job using the read image (ACT 51). In addition, when it is the already stored image (No in ACT 52), the processor 13 omits a thumbnail process and a image storing process.

In addition, when the image used in the job is not stored in advance (No in ACT 49), the processor 13 executes a normal job according to a parameter (ACT 51). For example, when it is a copying job or a scanning job, the processor 13 executes a job by newly reading the original document using the scanner 2. In addition, when it is a job in which an image stored in advance is not used (Yes in ACT 52), the processor 13 performs a thumbnail process and an image storing process (ACTS 53 and 54). The thumbnail process and the image storing process are described in ACTS 17 to 21 in FIG. 4.

In addition, when the execution of the job is completed, the processor 13 delivers a completion notification of the job, and information denoting an execution result of the job to the program of the job control layer 62 (ACT 55). When the completion of the job is notified, the processor 13 generates creates execution history information of the job based on the information denoting the execution result of the job. The execution history information of the job includes information denoting a storage destination of a thumbnail image and information denoting a storage destination of the image which is used in the job. For example, when the job is re-executed using the image stored in advance, the processor 13 generates job execution history information including existing thumbnail image and information which denotes the storage destinations of the image. When the execution history information of the job is generated, the processor 13 stores the generated execution history information of the job in the history DB 12a (ACT 56).

When the execution history information of the job is stored, the processor 13 delivers the information denoting the execution result of the job to the program of the application layer 61 (ACT 57). When the execution result of the job is received, the processor 13 displays the information denoting the execution result of the job on the display unit 51 of the operation panel 5 (ACT 58).

By performing the above described processes, it is possible to re-execute a job based on execution history information of the job using the digital multi-functional peripheral according to the embodiment. In addition, it is also possible to re-execute the job by changing set contents of the execution history information of the job.

Subsequently, managing of an image which is stored in the image storage unit 12b will be described.

By performing the above described processes, images which are used in jobs are accumulated in the image storage unit 12b. The control unit 11 of the system control unit 1 may delete the images which are stored in the image storage unit 12b according to a predetermined condition (security condition). In addition, a condition of storing an image in the image storage unit 12b (or condition of deleting image) may be set in each digital multi-functional peripheral, or may be set by each user.

For example, a maximum number of images stored in the image storage unit 12b may be set. When the maximum number of stored images is set, the control unit 11 deletes images in the order of the oldest execution history when the number of images which are stored in the image storage unit 12b exceeds the maximum number of stored images.

In addition, a maximum storage period in which an image may be stored may be set in the image storage unit 12b. When the maximum storage period is set, the control unit 11 deletes an image for which a storage period passes the maximum storage period among images which are stored in the image storage unit 12b.

According to the present invention, a job is executed on the basis of history database thereby a time to perform the print setting can be shortened and contributing to the improvement of usability.

As described above, the digital multi-functional peripheral according to the embodiment stores execution history information which includes set contents of an executed job. The digital multi-functional peripheral may execute a job by applying setting information which is obtained from the stored execution history information. For example, the digital multi-functional peripheral may re-execute the job by selecting the stored execution history information. In addition, the digital multi-functional peripheral may re-execute the job by changing a part of the set contents of the selected execution history information.

In addition, the digital multi-functional peripheral according to the embodiment forms a thumbnail image from the image which is used in the job, and stores the formed thumbnail image in correlation with the execution history information. The digital multi-functional peripheral displays the execution history information and the thumbnail image. A user may recognize a job which is executed in the past instinctively, using the thumbnail image, and may easily select an execution history in the past.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An image forming apparatus comprising:
a storage unit configured to store execution history information for a plurality of executed jobs including setting information for each of the plurality of executed jobs;
a display unit configured to display a list of the plurality of executed jobs;
an input unit configured to receive a selection of one of the plurality of executed jobs from the list displayed on the display unit; and
a control unit configured to execute a job using settings based on the setting information corresponding to the selected executed job.

2. The apparatus according to claim 1, wherein
the input unit is further configured to receive a selection of a change to the settings based on the setting information corresponding to the selected executed job, and
the control unit is further configured to execute the job using settings based on the selected change.

3. The apparatus according to claim 1 or 2, further comprising:
an image processing unit configured to generate a thumbnail image based on at least a part of an image which is used in an executed job, wherein
the storage unit is further configured to store the thumbnail image generated by the image processing unit in correlation with the execution history information of the corresponding executed job.

4. The apparatus according to claim 3, wherein
the display unit is further configured to display the thumbnail image in correlation the corresponding executed job.

5. The apparatus according to any one of claims 1 to 4, wherein
the storage unit is further configured to store an image used in an executed job in correlation with the execution history information of the corresponding executed job.

6. The apparatus according to claim 5, wherein
the control unit is further configured to re-execute the executed job using the stored image and settings based on the setting information corresponding to the selected executed job.

7. The apparatus according to claim 6, wherein
the control unit is further configured to delete the stored image according to a predetermined security condition.

8. A job control method which is used in an image forming apparatus comprising the steps of:
storing, in a storage unit, execution history information of each of a plurality of executed jobs including setting information for each of the plurality of executed jobs;
displaying, on a display unit, a list of the plurality of executed jobs;
receiving a selection of one of the plurality of executed jobs from the list displayed on the display unit; and
executing a job using settings based on the setting information corresponding to the selected executed job.

9. The method according to claim 8, further comprising the step of:
receiving a selection of a change to the settings based on the setting information corresponding to the selected execution history information, wherein
the job is executed using settings further based on the selected change.

10. The method according to claim 9, further comprising the steps of:
generating a thumbnail image based on at least a part of an image which is used in an executed job; and
storing the generated thumbnail image in correlation with the execution history information of the corresponding executed job.

11. The method according to claim 10, further comprising the step of:
displaying the thumbnail image in correlation with the corresponding executed job.

12. The method according to any one of claims 8 to 11, further comprising the step of:
storing an image used in an executed job in correlation with the execution history information of the corresponding executed job.

13. The method according to claim 12, wherein
executing the job comprises re-executing the selected executed job using the stored image and settings based on the setting information corresponding to the selected executed job.

14. The method according to claim 13, further comprising the step of:
deleting the stored image according to a predetermined security condition.

15. A non-transitory recording medium which stores a program which is used in an image forming apparatus, the program including instructions for causing a processor in the image forming apparatus to execute the steps of:
storing, in a storage unit, execution history information of each of a plurality of executed jobs including setting information for each of the plurality of executed jobs;
displaying, on a display unit, a list of the plurality of executed jobs;
receiving a selection of one of the plurality of executed jobs from the list displayed on the display unit; and
executing a job using settings based on the setting information corresponding to the selected executed job.
